# EUROPEAN PATENT SPECIFICATION

(11) **EP 1 712 388 B1**
(45) Date of publication and mention of the grant of the patent: **12.09.2007**
(21) Application number: 06076051.9
(22) Date of filing: 15.05.2006
(51) Int. Cl.: B60J 5/06

(54) **Curtainsider freight transporting unit for road and intermodal transport**
Mit Verschlussvorhang ausgerüstete Ladungstransporteinheit
Dispositif de transport de charge du type munie d'un rideau de fermeture

(30) Priority: 08.11.2005 GB 0522710
(43) Date of publication of application: 18.10.2006
(73) Proprietor: Phillips, John Arthur, Caistor Lincolnshire LN7 6RB (GB)
(72) Inventor: Phillips, John Arthur, Caistor Lincolnshire LN7 6RB (GB)

(56) References cited:
- AU-B2- 656 167
- GB-A- 1 581 879

## Description

This invention relates to curtainsider freight transporting units for road and intermodal transport i.e. rail and sea.

Curtainsider freight transporting units are used for the transporting of freight throughout the EU by road and other intermodal means i.e. rail and sea. Freight can be loaded and off-loaded from both the side and the rear of the unit. The design of the freight transporting unit should be flexible to cater for both these types of operations.

A curtainsider freight transporting unit as defined in the preamble of claim 1, comprising a sliding curtain being suspended from an upper track and having releasable tensioning means at its lower edges, is known for example from GB 1581879A.

Another example of prior art is US 3453020.

Curtainsider freight transporting units consist of a number of different types of units. In addition to road trailers, intermodal units can take the form of standard and non-standard ISO freight containers and swapbodies.

The units can be constructed, for example, with a rear arrangement consisting of solid rear doors (container style) or a tilt curtain arrangement with a hinged tail board.

The provision of a sliding curtain allows for quick and easy access to the interior body of the unit for loading and off-loading. Curtainsider freight transporting units have, for example, a slidable curtain fitted to the side of the unit whereby the curtain extends from the front of the unit, along the side, to the rear of the unit. The unit may have a slidable curtain fitted to both sides or one side may have for example a solid side. The curtain is suspended from the top by a tracking arrangement. To tension the curtain vertically there are a series of vertically extending straps fitted with a tensioning device connected to the bottom rail of the unit. These straps are fitted at various intervals along the side of the unit. At each end of the curtain there is a curtain pole which fits into an aperture and is tightened by a ratchet arrangement. The ratchet arrangement tensions the curtain in the longitudinally direction. To open the curtain, the tension in the vertically extending straps at the side is released and the straps undone. The ratchet arrangement is then operated at one end to release the tension in the curtain in the longitudinal direction and allow the curtain pole to be lifted out. The curtain can be slid open in either direction, front or rear, depending on whether the front or rear ratchet arrangement is released. When for example the curtain has been opened and slid to the rear of the unit it is not possible to gain full access to rear of the unit as the curtain obstructs this area. To access this area, the rear ratchet arrangement must be released and the rear curtain pole lifted out and the curtain slid to the front. To close the curtain the reverse process is carried out.

To facilitate the loading and off-loading of freight from the rear of the unit e.g. when utilising a dock loading bay, a freight transporting unit with solid rear doors (container style), the doors must be unlocked and opened. A freight transporting unit with a tilt curtain arrangement must have the curtain unlaced and the curtain lifted up. The tailboard can then be opened

The invention relates to curtainsider freight transporting units for road and intermodal transport constructed with a rear arrangement consisting of a sliding curtain.

The advantages of a curtainsider freight transporting unit constructed with a rear arrangement consisting of a sliding curtain are:-
1. A quick and easy access method to the interior body of the unit for loading and off-loading from the rear such as required when utilising a dock loading bay.
2. The overall tare weight of the unit will be reduced which will increase the payload cargo carrying capacity.
3. The arrangement will allow, on one side of the unit, for the side opening to be fully exposed for the total length of the unit. This means, for example, that the side curtain does not have to be released at the rear and moved to the front of the unit to facilitate loading and off-loading at the rear end. This speeds up the overall operation.
4. The fully exposed side opening will facilitate the loading and off-loading of long indivisible loads such as steel sections, pipes etc.
5. The cost of manufacturer compared to the arrangement of the solid rear doors will be cheaper.
6. The same components are used for the rear arrangement as the side arrangement which simplifies the process of repairs.
7. Units with solid rear doors compared with this sliding curtain invention are more susceptible to damage particularly from impact which is costly to repair and results in longer downtime, when the unit is unavailable for use.

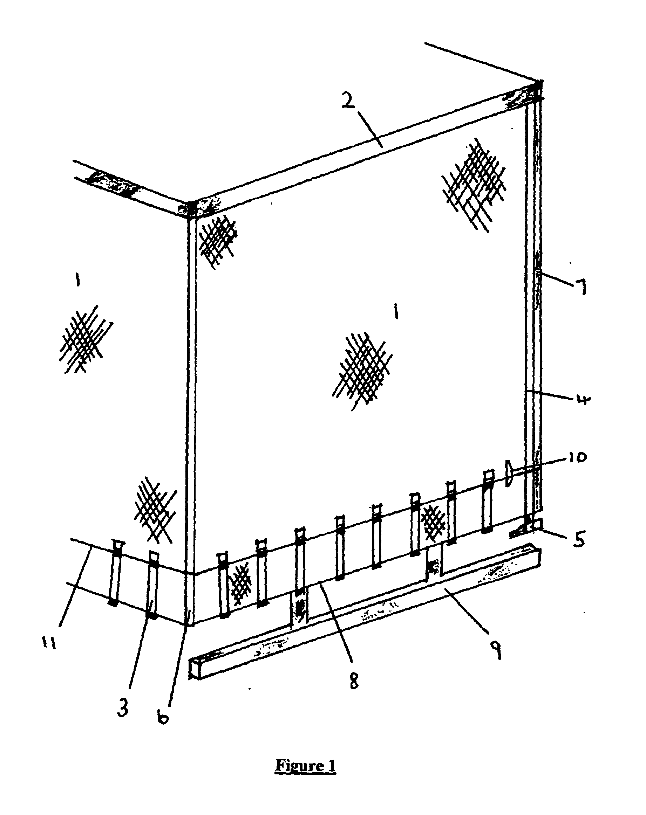

In order that the invention may be fully understood and readily carried into effect, the same will now be described, with reference to figure 1 which illustrates an example of a freight transporting unit according to the invention.

Figure 1 is a drawing of the invention depicting the curtainsider freight transporting unit with a rear arrangement consisting of a sliding curtain. An example rear bumper protection bar (9), as fitted to a road trailer, has been added to the drawing solely to indicate that the view shown is from the rear. Also the curtain (1) and the tracking arrangement (2) has been shown to extend from the near-side of the unit around to the off-side of the unit. The arrangement can be constructed in a similar manner extending from the off-side of the unit around the rear to the near-side. Figure 1's purpose is to illustrate the invention, viewed from one side, the invention however includes both the above options.

The curtain (1) is suspended from an upper tracking arrangement (2) which extends from a first front corner of the unit along one side thereof to a rear corner, around a rounded first rear corner post (6) and across the rear face of the unit terminating at a second rear corner post (7) opposite to the first rear corner post, said curtain having releasable tensioning means at its lower edges (3), secured to the bottom rail arrangement (8), so that lower tracks are not required.

A rear curtain pole (4), which has been repositioned while closing the curtain from the first corner post (6) of the unit to the second rear corner post (7) fits into an aperture in the arrangement of that corner post (7) in a similar manner as it is fitted into the first corner post (6). A ratchet arrangement (5) is also incorporated in the arrangement of the corner post (7). Additional vertical extending straps with tensioning device (3) are fitted at intervals and secured to the bottom rail arrangement (8) in a similar manner as at the side of the trailer. The number of straps (3) shown in figures 1 is illustrative only.

A hand grip (10) consisting of a plastic loop attached to the curtain (1) is shown. This assists the operator when opening and closing the curtain (1) and can be considered optional. Its position is also indicitative.

For units that are required to be fitted with a TIR cord, the TIR cord (11) can be threaded through the tensioning device of the vertical extending straps (3).

The unit may further comprise of a second sliding curtain arrangement, said curtain being suspended from a second upper track which extends from a second front corner opposite to the first front corner of the unit, along a second side thereof and which terminates at the second rear corner post (7) where said first track terminates.

With reference to the invention illustrated in figure 1, the operation of the curtain (1) allows access to both the side of the unit and to the rear. To gain access to the side, the tension in the straps (3) at the side is released and the straps (3) undone. The front ratchet arrangement is then operated to release the tension in the curtain (1) longitudinally. This allows for the front curtain pole to be lifted out from the aperture and the curtain (1) can then be opened, along the side, by sliding the curtain towards the rear of the unit. If access is required all the way to the rear of the unit, the tension in the straps (3), at the rear face of the unit, can be released and the straps (3) undone. The curtain (1) can be slid open around the first rear corner post (6) and across the rear face of the unit. This will allow the side opening to be fully exposed. This means that the curtain does not have to be also released at the rear and slid to the front of the unit, to facilitate loading and off-loading at the side towards the rear. This speeds up the overall operation. The fully exposed side opening will facilitate easier the loading and off-loading of long indivisible loads from the side, such as steel sections, pipes etc. utilising for example a fork-lift.

To gain access to the rear face of the unit for loading and off-loading e.g. when utilising a dock loading bay and also to gain access to the side of the unit, towards the rear, the tension in the straps (3), at the rear face is released and the straps (3) undone. The ratchet arrangement (5), which is incorporated in the arrangement of the second rear corner post (7) is then operated to release the tension in the curtain (1) longitudinally. This allows for the rear curtain pole (4) to be lifted out from the aperture and the curtain (1) can then be opened, by sliding the curtain across the rear face of the unit and around the first rear corner post (6) to expose the rear face of the unit and the side if required.

To close the curtain the reverse process is carried out.

In the case whereby the unit further comprises of a second sliding curtain this would be opened and closed as per the arrangement detailed for existing units in the description above.

### SUMMARY LIST OF COMPONENTS RELATING TO FIGURE 1

- 1: Curtain
- 2: Tracking Arrangement
- 3: Strap with Tensioning Device
- 4: Curtain Pole
- 5: Ratchet Arrangement
- 6: Rounded First Rear Corner Post
- 7: Second Rear Corner Post
- 8: Bottom Rail Arrangement
- 9: Rear Bumper Protection Bar
- 10: Hand Grip (optional)
- 11: TIR Cord (optional)

## Claims

1. A curtainsider freight transporting unit comprising a sliding curtain arrangement, said curtain (1) being suspended from an upper track (2) and having releasable tensioning means (3) at its lower edges so that lower tracks are not required and having releasable tensioning means (5) to tension the curtain longitudinally, the unit being **characterised in that** the upper track (2) extends from a first front corner of the unit along one side thereof to a rear corner, around a rounded first rear corner post (6) and across the rear face of the unit terminating at a second rear corner post (7) opposite to the first rear corner post.

2. A unit according to claim one, further comprising a second sliding curtain arrangement, said curtain being suspended from a second upper track which extends from an second front corner opposite to the first front corner of the unit, along a second side thereof, and which terminates at the second rear corner post (7) where the first upper track (2) terminates.

## Patentansprüche

1. Curtainsider-Frachttransporteinheit mit einer Schiebplanenanordnung, wobei die Plane (1) von einer oberen Schiene (2) herabhängt und lösbare Spannvorrichtungen (3) an ihren Unterkanten aufweist, so dass untere Schienen nicht benötigt werden, sowie lösbare Spannvorrichtungen (5), um die Plane in Längsrichtung zu spannen, wobei die Einheit **dadurch gekennzeichnet ist, dass** die obere Schiene (2) sich von einer ersten vorderen Ecke der Einheit entlang einer Seite derselben zu einer hinteren Ecke, um eine gerundete erste hintere Ecksäule (6) und quer über die Rückseite der Einheit bis zu einer zweiten hinteren Ecksäule (7), die der ersten hinteren Ecksäule gegenüberliegt, erstreckt.

2. Einheit nach Anspruch 1, weiterhin umfassend eine zweite Schiebeplanenanordnung, wobei die Plane von einer zweiten oberen Schiene herabhängt, die sich von einer zweiten vorderen Ecke der Einheit, die der ersten vorderen Ecke gegenüberliegt, entlang einer zweiten Seite der Einheit erstreckt und an der zweiten hinteren Ecksäule (7) endet, wo die erste obere Schiene (2) endet.

## Revendications

1. Unité de transport de marchandises à bâche comprenant un arrangement de bâche coulissant, ladite bâche (1) étant suspendue à partir d'un rail supérieur (2) et ayant des moyens de mise en tension aptes à être libérés (3) à ses bordures inférieures de telle sorte que des rails inférieures ne sont pas nécessaires et ayant un moyen de mise en tension apte à être libéré (5) pour mettre en tension la bâche longitudinalement, l'unité étant **caractérisée par le fait que** le rail supérieur (2) s'étend d'un premier coin avant de l'unité le long d'un côté de celle-ci à un coin arrière, autour d'un premier poteau de coin arrière arrondi (6) et à travers la face arrière de l'unité se terminant à un second poteau de coin arrière (7) opposé au premier poteau de coin arrière.

2. Unité selon la revendication un, comprenant en outre un second arrangement de bâche coulissante, ladite bâche étant suspendue à partir d'un second rail supérieur qui s'étend à partir d'un second coin avant opposé au premier coin avant de l'unité, le long d'un second côté de celle-ci, et qui se termine au second poteau de coin arrière (7) où le premier rail supérieur (2) se termine.
